Europäisches Patentamt

European Patent Office

Office européen des brevets

(19)

(11) Numéro de publication : **0 090 743**
**B1**

(12)

# FASCICULE DE BREVET EUROPÉEN

(45) Date de publication du fascicule du brevet :
**22.01.86**

(51) Int. Cl.⁴ : **G 21 C 11/08**, F 28 D 7/00

(21) Numéro de dépôt : **83400683.5**

(22) Date de dépôt : **31.03.83**

(54) **Dispositif de protection contre la chaleur et les radiations pour un échangeur de chaleur intermédiaire plongeant dans une cuve de réacteur nucléaire.**

(30) Priorité : **02.04.82 FR 8205769**

(43) Date de publication de la demande :
**05.10.83 Bulletin 83/40**

(45) Mention de la délivrance du brevet :
**22.01.86 Bulletin 86/04**

(84) Etats contractants désignés :
**BE DE GB IT NL**

(56) Documents cités :
**EP-A- 0 012 691**
**EP-A- 0 043 766**
**FR-A- 2 090 262**
**FR-A- 2 132 817**

(73) Titulaire : **NOVATOME**
**20 Avenue Edouard Herriot**
**F-92350 Le Plessis Robinson (FR)**

(72) Inventeur : **Thevenin, Michel**
**11 allée du Mali**
**F-94260 Fresnes (FR)**
Inventeur : **Pierrey, Jean-Louis**
**7 rue du 8 Mai 1945**
**F-92340 Bourg la Reine (FR)**

(74) Mandataire : **Polus, Camille et al**
**c/o Cabinet Lavoix 2, Place d'Estienne d'Orves**
**F-75441 Paris Cedex 09 (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

L'invention concerne un dispositif de protection contre la chaleur et les radiations pour un échangeur de chaleur intermédiaire plongeant dans une cuve de réacteur nucléaire remplie de métal liquide constituant le fluide primaire du réacteur.

Les réacteurs nucléaires à neutrons rapides comportent généralement une cuve principale de grandes dimensions remplie de sodium liquide surmonté d'un gaz inerte tel que de l'argon et fermée par une dalle de grande épaisseur, horizontale, dans laquelle des ouvertures sont ménagées pour le passage des composants du réacteur.

En particulier, les pompes primaires mettant le sodium liquide remplissant la cuve en circulation et les échangeurs intermédiaires effectuant l'échange de chaleur entre le sodium primaire remplissant la cuve et le sodium secondaire transportant la chaleur vers les générateurs de vapeur, traversent la dalle à l'intérieur d'ouvertures de grandes dimensions et reposent sur la dalle du réacteur par l'intermédiaire d'une bride fixée à leurs parties supérieures.

Les échangeurs de chaleur intermédiaires comportent une partie inférieure de grand diamètre plongeant dans le sodium liquide, si bien que le passage dans la dalle doit avoir un diamètre suffisamment grand pour permettre la mise en place ou l'extraction de l'échangeur intermédiaire sans difficulté.

Il subsiste donc autour de la partie supérieure de l'échangeur intermédiaire dans l'ouverture ménagée dans la dalle du réacteur un espace périphérique d'une assez grande largeur. Il est donc nécessaire de limiter la circulation des gaz chauds et d'empêcher la sortie des radiations en provenance des éléments irradiés du réacteur dans cet espace périphérique.

En outre, le sodium secondaire circule d'abord de haut en bas dans un conduit situé à la partie centrale de l'échangeur, puis de bas en haut dans un faisceau tubulaire où se produit l'échange de chaleur avec le fluide primaire.

A la sortie du faisceau tubulaire, le sodium liquide secondaire chaud circule de bas en haut dans un conduit annulaire limité à sa partie centrale par le conduit de circulation descendante du sodium et à sa partie périphérique par une virole à axe vertical constituant l'enveloppe de l'échangeur intermédiaire.

A la partie supérieure de l'échangeur, cette virole se dédouble en une virole interne à l'intérieur de laquelle circule le sodium secondaire chaud et en une virole externe sur laquelle est fixée la bride de l'échangeur. La virole interne et la virole externe sont reliées entre elles et à la partie supérieure de l'échangeur par une pièce de raccord symétrique de révolution dont la méridienne a la forme d'un Y.

Il importe de protéger la traversée de la dalle, en particulier à sa partie supérieure, contre la chaleur dégagée par le sodium liquide secondaire en circulation dans l'échangeur intermédiaire.

Il importe également de protéger la pièce de raccord entre les viroles de l'échangeur intermédiaire contre des conditions thermiques défavorables, cette pièce ayant une importance extrêmement grande pour la tenue mécanique de l'échangeur intermédiaire.

Dans la demande de brevet EP-A1-0 043 766, on a décrit un dispositif de réduction des contraintes thermiques sur la virole d'un échangeur de chaleur intermédiaire comportant un moyen d'isolation thermique de forme annulaire disposé sous la bride de l'échangeur de chaleur dans un espace annulaire entourant la paroi de l'échangeur de chaleur à l'intérieur de la traversée de la dalle. Ce moyen d'isolation thermique est fermé vers l'extérieur par une chemise cylindrique solidaire à sa partie inférieure d'une virole à axe vertical disposée autour de la virole externe de l'échangeur de chaleur avec un faible espacement pour former une chicane sur le trajet de l'argon au voisinage de la surface du sodium liquide remplissant la cuve. Dans un tel dispositif cependant, la protection contre les radiations n'est pas assurée de façon optimale puisqu'il n'existe pas de barrière efficace contre les radiations dans la traversée de la dalle autour de l'échangeur de chaleur. D'autre part, la pièce de raccord en Y entre la virole interne et la virole externe de l'échangeur de chaleur n'est pas suffisamment protégée contre les conditions thermiques défavorables régnant dans la cuve.

On connaît également, par la demande de brevet FR-A-2 132 817, un échangeur de chaleur intermédiaire comportant une tête équipée d'un bouclier contre les radiations mais la structure de cet échangeur de chaleur et son montage sur la dalle du réacteur sont tout à fait différents de ceux des échangeurs de chaleur intermédiaires traversant la dalle d'un réacteur à neutrons rapides tel que construit actuellement. La solution retenue dans le FR-A-2 132 817 n'est donc pas transposable dans ce cas.

Le but de l'invention est donc de proposer un dispositif de protection contre la chaleur et les radiations pour un échangeur de chaleur intermédiaire plongeant dans une cuve de réacteur nucléaire remplie de métal liquide constituant le fluide primaire du réacteur et traversant une dalle de grande épaisseur fermant la cuve sur laquelle l'échangeur repose par l'intermédiaire d'une bride solidaire de sa partie supérieure, l'échangeur comportant dans sa partie supérieure une virole interne à axe vertical, à l'intérieur de laquelle circule du métal liquide secondaire dont l'échauffement est assuré par le fluide primaire et une virole externe reliée à la virole interne par une pièce de section en Y et coaxiale à celle-ci, un espace périphérique étant ménagé autour de la virole externe, dans l'ouverture de traversée de la dalle et, le dispositif de protection comportant une virole coaxiale aux viroles interne et externe fixées sous la bride dans l'espace périphérique autour de la virole externe portant à sa partie supérieure sous la bride un moyen d'isolation thermique de forme annulaire, dispositif qui permette d'isoler efficacement l'échangeur intermédiaire dans sa traversée de la dalle aussi bien en ce qui concerne les radiations qu'en ce qui concerne la chaleur dégagée par le sodium secondaire.

Dans ce but, la virole comporte à sa partie inférieure une pièce annulaire massive d'isolation contre les radiations d'une section telle qu'elle occupe la plus grande partie de la section de l'espace périphérique et la pièce de raccord en Y est disposée au niveau de la partie centrale de la virole entre la pièce massive et le moyen d'isolation thermique.

Afin de bien faire comprendre l'invention, on va maintenant décrire à titre d'exemple non limitatif, en se référant aux figures jointes en annexe, un échangeur de chaleur intermédiaire comportant un dispositif de protection contre la chaleur et les radiations suivant l'invention.

La figure 1 représente une vue en élévation d'un échangeur intermédiaire en position dans la cuve d'un réacteur nucléaire à neutrons rapides refroidi par du sodium liquide.

La figure 2 est une vue en coupe très agrandie de la partie supérieure de l'échangeur de chaleur intermédiaire, au niveau de la traversée de la dalle.

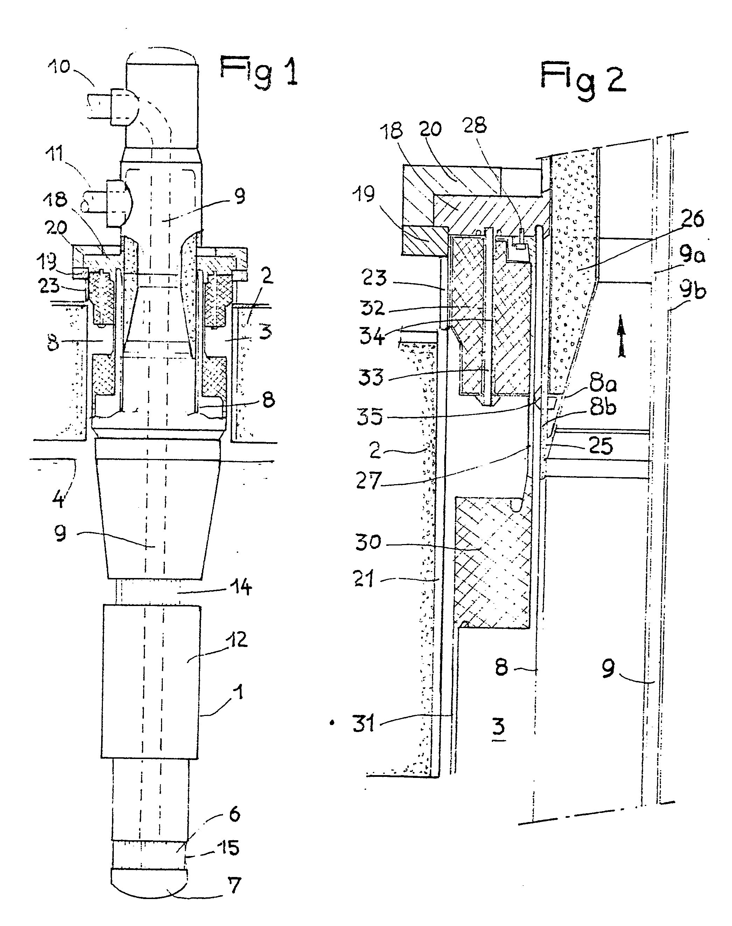

Sur la figure 1, on voit un échangeur intermédiaire 1 traversant la dalle 2 d'un réacteur nucléaire à neutrons rapides par une ouverture 3 d'un diamètre légèrement supérieur au diamètre maximum de l'échangeur de chaleur. La dalle 2 ferme la partie supérieure de la cuve renfermant du sodium liquide jusqu'au niveau 4. L'échangeur de chaleur plongé dans le sodium liquide comporte dans sa partie immergée un faisceau tubulaire 6 communiquant à l'une de ses extrémités avec une chambre inférieure limitée par un fond bombé 7 et à sa partie supérieure avec une chambre annulaire limitée par une virole à axe vertical 8 et par un conduit central vertical 9.

Le conduit central 9 débouche à sa partie supérieure dans la tubulure 10 d'arrivée de sodium liquide secondaire.

La chambre annulaire comprise entre la virole 8 et le conduit 9 communique à sa partie supérieure avec la tubulure 11 de sortie du sodium secondaire échauffé. Les tubulures 10 et 11 sont reliées au circuit de sodium secondaire du réacteur nucléaire.

La virole externe 12 entourant l'échangeur intermédiaire à sa partie inférieure comporte une fenêtre d'entrée 14 du sodium primaire dans l'échangeur de chaleur et une fenêtre de sortie 15 de ce sodium primaire.

Lors de sa circulation entre les fenêtres 14 et 15, le sodium primaire contenu dans la cuve du réacteur échauffe le sodium secondaire circulant dans le faisceau tubulaire 6. Le sodium secondaire pénétrant dans la chambre annulaire limitée par la virole 8 et le conduit 9 est donc du sodium chaud qui est amené à traverser la partie de l'échangeur disposée au niveau de la dalle 2 avant sa sortie par la tubulure 11.

Une bride 18 solidaire de la virole 8 permet de faire reposer l'échangeur de chaleur sur la dalle 2 par l'intermédiaire d'un support 19, une contre-bride 20 permettant la fixation de la bride sur son support.

On va maintenant décrire en se référant à la figure 2, le dispositif de protection contre la chaleur et les radiations situé au niveau de la dalle, lorsque l'échangeur intermédiaire est en position de service tel que représenté à la figure 1.

L'ouverture 3 de la dalle est entourée par une chemise métallique 21 sur laquelle est fixé le support de bride 19 par l'intermédiaire d'une virole de fixation 23.

La virole externe 8 est fixée sur la bride 18. Cette virole 8 se dédouble en une virole interne 8a et une virole externe 8b grâce à une pièce de liaison 25 annulaire dont la section méridienne a la forme d'un Y.

La virole interne 9 est constituée par une double virole 9a et 9b dans l'espace interne de laquelle se trouve un gaz inerte d'isolation thermique.

Le sodium liquide secondaire chaud à la sortie du faisceau tubulaire circule de bas en haut dans le conduit annulaire ménagé par les viroles 8 et 9 puis par la virole 8a et la double virole 9.

Entre la virole interne 8a en contact avec le sodium liquide secondaire chaud et la virole externe 8b est placé un isolant thermique 26 constitué par un matériau calorifuge minéral.

Sous la bride 18, au niveau du raccord de la virole 8 est fixée une virole 27 par l'intermédiaire de vis 28. Cette virole 27 est coaxiale à la virole 8 et d'un diamètre un peu supérieur à celui de cette virole.

A sa partie inférieure, la virole 27 est soudée à une pièce annulaire massive 30 en acier ordinaire dont la largeur est telle que cette pièce occupe la plus grande partie de l'espace annulaire compris entre les viroles coaxiales 8 et 21.

A sa partie inférieure, la pièce annulaire 30 est prolongée par une virole 31 jusqu'au niveau inférieur de la dalle 2 et de la virole 21 limitant l'ouverture de celle-ci vers l'intérieur.

La virole 31 permet de protéger le passage de la dalle 2 et la virole 21 contre le rayonnement thermique en provenance de la virole 8 à l'intérieur de laquelle s'écoule le sodium chaud.

La pièce massive 30 permet d'absorber les radiations en provenance des éléments et composants irradiés contenus dans la cuve du réacteur.

Au-dessus de la pièce massive en acier 30, la virole 27 procure une protection contre le rayonnement thermique de la virole 8. C'est dans cette zone que se trouve la pièce 25 de raccord entre les viroles 8, 8a et 8b.

A la partie supérieure de la virole 27 et sous la bride 18 est disposée une enceinte annulaire 32 à l'intérieur de laquelle est placé un calorifuge métallique constitué par des éléments séparés formant barrière au rayonnement thermique. L'espace intérieur de l'enceinte annulaire 32 est rempli par de l'argon d'isolation. Des tubes 34 assurent l'assemblage des pièces de l'enceinte 32 et du calorifuge métallique.

On peut également disposer à l'intérieur de l'enceinte 32 des disques d'acier qui forment une barrière au rayonnement thermique et qui sont maintenus espacés les uns des autres par les tubes 34.

Le diamètre extérieur de l'enceinte 32 est très légèrement inférieur au diamètre intérieur du support 19 et de la virole 23.

De cette façon, les gaz chauds présents au-dessus du sodium liquide dans la cuve ne peuvent parvenir jusqu'à la partie supérieure de la dalle sur laquelle repose la bride 18 de l'échangeur de chaleur intermédiaire.

Entre la virole 8 et la virole 27, est disposé un anneau élastique métallique 35 composé de 3 secteurs disposés à 120° autour de la virole 8 de l'échangeur de chaleur. Cet anneau élastique permet de limiter les mouvements de gaz de convection dans l'espace compris entre les pièces 8 et 27 et donc les apports de chaleur en partie haute de l'appareil.

On voit que les principaux avantages du dispositif selon l'invention sont de permettre une excellente protection contre la chaleur et les radiations de la partie de la dalle située au voisinage de la traversée et de la zone voisine de l'échangeur de chaleur intermédiaire située au-dessus de la dalle 2.

Ce dispositif est d'une structure très simple et permet d'éviter des déformations thermiques de la pièce de raccord en Y préjudiciable à une bonne tenue mécanique.

La partie inférieure du dispositif comportant la pièce massive 30 et la virole 31 peut être construite en acier ordinaire ce qui réduit le coût de construction de l'échangeur de chaleur. L'ensemble du dispositif de protection qui n'est pas en contact avec le sodium liquide peut également être réalisé en acier ordinaire.

Enfin, la mise en place du dispositif de protection à l'intérieur de l'espace périphérique disposé autour de celui-ci dans le passage de la dalle, se fait automatiquement au moment de la mise en place de l'échangeur de chaleur à l'intérieur de la cuve.

Mais l'invention ne se limite pas au mode de réalisation qui vient d'être décrite, c'est ainsi que la pièce massive 30 peut être réalisée en un autre matériau que l'acier ordinaire. Le calorifuge métallique à l'intérieur de l'enceinte 32 peut être réalisé sous une forme quelconque ou constitué par un ensemble de disques formant écran anti-rayonnement.

Cette enceinte peut comporter des dispositifs quelconques pour assurer le remplissage et la vidange de l'argon.

Le calorifuge minéral 26 disposé entre les viroles 8a et 8b peut être constitué par des blocs de formes quelconques juxtaposés et disposés dans l'intervalle annulaire jusqu'au niveau de la bride 18 ou un peu au-dessus.

Toutes les pièces extérieures à la virole 8 renfermant le sodium liquide peuvent être réalisées en acier ordinaire non inoxydable, ce qui réduit le coût de construction de l'échangeur de chaleur.

Le dispositif suivant l'invention s'applique à tous les échangeurs de chaleur intermédiaires utilisés dans les réacteurs nucléaires à neutrons rapides de type intégré.

**Revendications**

1. Dispositif de protection contre la chaleur et les radiations pour un échangeur de chaleur intermédiaire plongeant dans une cuve de réacteur nucléaire remplie de métal liquide constituant le fluide primaire du réacteur et traversant une dalle (2) de grande épaisseur fermant la cuve sur laquelle l'échangeur repose par l'intermédiaire d'une bride (18) solidaire de sa partie supérieure, l'échangeur comportant à sa partie supérieure une virole interne (8a) à axe vertical, à l'intérieur de laquelle circule du métal liquide secondaire dont l'échauffement est assuré par le fluide primaire et une virole externe (8b) reliée à la virole interne (8a) par une pièce (25) à section en Y et coaxiale à celle-ci, un espace périphérique étant ménagé autour de la virole externe (8b) dans l'ouverture de la traversée de la dalle et, le dispositif de protection comportant une virole (27) coaxiale aux viroles interne et externe (8a, 8b) fixée sous la bride (18) dans l'espace périphérique autour de la virole externe (8b) portant à sa partie supérieure sous la bride (18) un moyen d'isolation thermique (32) de forme annulaire, caractérisé par le fait que la virole (27) porte à sa partie inférieure une pièce annulaire massive (30) d'isolation contre les radiations d'une section telle qu'elle occupe la plus grande partie de la section de l'espace périphérique et que la pièce de raccord en Y (25) est disposée au niveau de la partie centrale de la virole (27) entre la pièce massive (30) et le moyen d'isolation thermique (32).

2. Dispositif de protection suivant la revendication 1 caractérisé par le fait que l'espace compris entre les viroles interne et externe (8a, 8b) de l'échangeur est rempli par un calorifuge minéral (26) au moins jusqu'au niveau de la bride (18).

3. Dispositif de protection suivant l'une quelconque des revendications 1 et 2, caractérisé par le fait que le moyen d'isolation thermique (32) disposé sous la bride (18) est constitué par une enceinte annulaire renfermant un calorifuge et un gaz de remplissage inerte tel que l'argon.

4. Dispositif de protection suivant l'une quelconque des revendications 1, 2 et 3, caractérisé par le fait que la pièce massive (30) est en acier ordinaire.

5. Dispositif de protection suivant l'une quelconque des revendications 1, 2, 3 et 4, caractérisé par le fait que la pièce massive (30) est prolongée à sa partie inférieure par une virole (31) coaxiale aux viroles (8) de l'échangeur de chaleur jusqu'au niveau inférieur de la dalle (2) du réacteur.

6. Dispositif de protection suivant l'une quelconque des revendications précédentes, caractérisé par le fait que l'ensemble du dispositif de protection est en acier ordinaire.

## Claims

1. A device for protecting against heat and radiations for an intermediate heat exchanger extending into a nuclear reactor vessel filled with liquid metal constituting the primary fluid of the reactor and extending through a slab (2) of great thickness closing the vessel on which the exchanger bears through a flange (18) connected to its upper part, the exchanger comprising in its upper part an inner sleeve (8a) having a vertical axis and in which circulates the secondary liquid metal, the heating of which is ensured by the primary fluid and an outer sleeve (8b) connected to the inner sleeve (8a) by a Y-sectioned element (25) coaxial with the inner sleeve, a peripheral space being provided around the outer sleeve (8b) in the opening of the passage through the slab and the protecting device comprising a sleeve (27) coaxial with the inner and outer sleeves (8a, 8b) fixed under the flange (18) in the peripheral space around the outer sleeve (8b) carrying in its upper part under the flange (18) thermal insulating means (32) of annular shape, characterised in that the sleeve (27) carries in its lower part a solid annular element (30) for insulating against radiations and of such section that it occupies the major part of the section of the peripheral space and the Y-sectioned connected element (25) is disposed in the region of the central part of the sleeve (27) between the solid element (30) and the thermal insulating means (32).

2. A protecting device according to claim 1, characterised in that the space between the inner and outer sleeves (8a, 8b) of the exchanger is filled with a mineral heat insulator (26) at least up to the level of the flange (18).

3. A protecting device according to claim 1 or 2, characterised in that the thermal insulating means (32) disposed under the flange (18) is formed by an annular enclosure enclosing a heat insulator and an inert filling gas such as argon.

4. A protecting device according to any one of the claims 1, 2 and 3, characterised in that the solid element (30) is of ordinary steel.

5. A protecting device according to any one of the claims 1, 2, 3 and 4, characterised in that the solid element (30) is prolonged in its lower part by a sleeve (31) coaxial with the sleeves (8) of the heat exchanger down to the lower level of the slab (2) of the reactor.

6. A protecting device according to any one of the preceding claims, characterised in that the whole of the protecting device is of ordinary steel.

## Patentansprüche

1. Schutzvorrichtung gegen Wärme und Strahlung für einen in einem Reaktorbehälter eingetauchten Zwischen-Wärmetauscher, wobei der Reaktor mit Flüssigmetall gefüllt ist, das das Primärfluid des Reaktors bildet und eine den Behälter abschließende Platte großer Dicke (2) durchquert, auf der der Wärmetauscher unter Zwischenschaltung eines mit seinem oberen Teil mit dem Wärmetauscher fest verbundenen Flansch (18) ruht, und wobei der Wärmetauscher an seinem oberen Teil einen Innenmantel (8a) mit vertikaler Achse, in dessen Inneren ein Sekundärflüssigmetall zirkuliert, dessen Erwärmung durch das Primärfluid erfolgt und einen Außenmantel (8b) aufweist, der mit dem Innenmantel (8a) über ein Stück (25) mit y-förmigen Querschnitt verbunden ist, das koaxial zum Innenmantel angeordnet ist, und ein Ringraum um den Außenmantel (8b) in der Öffnung des Durchbruchs der Platte angeordnet ist, und wobei die Schutzvorrichtung einen zu den inneren und äußeren Mänteln (8a, 8b) koaxialen Mantel (27) aufweist, der unter dem Flansch (18) in dem Ringraum um den äußeren Mantel (8b) befestigt ist und in seinem oberen Bereich unterhalb des Flansches (18) eine ringförmige thermische Isolierung (32) trägt, dadurch gekennzeichnet, daß der Mantel (27) in seinem unteren Teil ein massives ringförmiges Stück (30) zur Isolierung gegenüber Strahlung trägt, dessen Querschnitt derart ausgebildet ist, daß das Ringstück den größten Teil des Querschnitts des Ringraums einnimmt und dadurch, daß das y-förmige Verbindungsstück (25) auf der Höhe des Mittenbereichs des Mantels (27) zwischen dem massiven Stück (30) und der thermischen Isolierung (32) angeordnet ist.

2. Schutzvorrichtung nach Anspruch 1, dadurch gekennzeichnet, daß der Raum zwischen dem Innen- und dem Außenmantel (8a, 8b) des Wärmetauschers mit einem wärmeisolierenden Mineralstoff (26), mindestens bis auf die Höhe des Flansches (18) aufgefüllt ist.

3. Schutzvorrichtung nach Anspruch 1 oder 2, dadurch gekennzeichnet, daß die unterhalb des Flansches (18) angeordnete thermische Isolierung (32) aus einem ringförmigen Behälter besteht, der eine Wärmedämmung und ein inertes Füllgas, wie z. B. Argon beinhaltet.

4. Schutzvorrichtung nach einem der Ansprüche 1 bis 3, dadurch gekennzeichnet, daß das massive Stück (30) aus normalen Stahl besteht.

5. Schutzvorrichtung nach einem der Ansprüche 1 bis 4, dadurch gekennzeichnet, daß das massive Stück (30) in seinem unteren Bereich durch einen zu den Mänteln (8) des Wärmetauschers koaxialen Mantel (31) bis auf die Unterseite der Platte (2) des Reaktors verlängert ist.

6. Schutzvorrichtung nach einem der Ansprüche 1 bis 5, dadurch gekennzeichnet, daß die Gesamtheit aller Bestandteile der Schutzvorrichtung aus normalen Stahl gefertigt sind.

Fig 1

Fig 2